# DEMANDE DE BREVET EUROPEEN

(11) **EP 1 586 666 A1**
(43) Date de publication de la demande: **19.10.2005**
(21) Numéro de dépôt: 04101499.4
(22) Date de dépôt: 13.04.2004
(51) Int. Cl.: C22B 7/04, C21B 3/06

(54) **Procédé de valorisation de laitiers métallurgiques provenant de l'élaboration de l'acier**

(71) Demandeur: PAUL WURTH S.A., 1122 Luxembourg (LU)
(72) Inventeur: Roth, Jean-Luc, 57100 Thionville (FR); Lonardi, Emile, 4945 Bascharage (LU); Rocchi, Dominique, 54490 Joudreville (FR)
(74) Mandataire: Kihn, Pierre Emile Joseph

(57) **Abrégé**

On présente un procédé de traitement de laitier d'aciérie électrique et de laitier de convertisseur comprenant les étapes suivantes :
(a) transfert dudit laitier dans un récipient métallurgique comprenant un pied de bain métallique ;
(b) réduction des oxydes de fer contenus dans le laitier par ajout de composants réducteurs dans le pied de bain et chauffage dudit laitier dans ce récipient métallurgique par injection d'un gaz contenant de l'oxygène dans le pied de bain métallique,
(c) refroidissement forcé dudit laitier.

## Description

### Introduction

La présente invention concerne un procédé de post-traitement de laitiers métallurgiques.

### État de la technique

Il est connu depuis longtemps de valoriser les laitiers de hauts fourneaux en tant que matières premières, par exemple dans la construction de routes, dans la fabrication du ciment ou dans la production d'engrais.

Cependant, en ce qui concerne la valorisation de laitiers d'aciéries électriques, de laitiers de convertisseur (laitiers de type BOF basic oxygen furnace) etc. on ne dispose aujourd'hui pas encore de solutions satisfaisantes.

Contrairement aux laitiers liquides de hauts fourneaux, ces laitiers d'aciéries électriques de type EAF ne sont généralement pas valorisés et sont simplement déversés sur des crassiers. Une des raisons principales est que le conditionnement final d'un laitier moussant, par exemple sous forme d'une granulation aqueuse telle qu'opérée sur les laitiers de hauts fourneaux, pose des problèmes de mise en oeuvre. En effet, un laitier de four électrique forme une mousse volumineuse qui s'écoule difficilement et qu'il est impossible de refroidir de façon abrupte. De plus, la température d'un laitier de four électrique est proche de sa température de solidification (proche de 1600°C), ce qui rend le laitier visqueux et limite naturellement aussi les possibilités d'un conditionnement rationnel du laitier.

Une autre raison limitant les possibilités de valorisation du laitier d'aciéries en particulier le laitier de convertisseur est qu'il contient de la chaux libre. Il n'est donc pas possible d'employer ce laitier comme remblai pour le génie civil, car la chaux libre entraînerait le gonflement ultérieur du matériau. Afin de stabiliser le laitier avant son utilisation, on peut retourner et arroser régulièrement le crassier, c'est-à-dire neutraliser la chaux libre à l'eau, mais cette pratique est coûteuse sans être fiable.

Le brevet US 4,179,279 décrit un procédé qui devrait permettre de produire un laitier de four électrique stabilisé. Selon ce procédé on ajoute du « red mud », c'est-à-dire un résidu du traitement de la bauxite par de la soude caustique, sous forme de briquettes ou boulettes (« pellets ») dans un laitier fondu produit dans un four électrique. L'état physique dans lequel le laitier fondu se présente n'est pas précisé. Comme la température de fusion du « red mud » est substantiellement inférieure à la température du laitier en fusion, il paraît qu'on peut ajouter jusqu'à 20% de « red mud » au laitier fondu sans fournir de source de chaleur externe, et qu'on peut même ajouter jusqu'à 50% de « red mud » au laitier fondu, si on fournit une source de chaleur externe pour faire fondre le « red mud ». Selon le brevet US 4,179,279, le « red mud » paraît agir avec le CaO libre et le 2CaO.SiO₂ du laitier et ainsi stabiliser ainsi le laitier. Le brevet US ne précise pas comment on conditionne le mélange fondu de laitier et de « red mud » en vue de sa valorisation ultérieure. Cependant, le brevet US confirme ce qui a été dit plus haut au sujet d'un refroidissement rapide du laitier de four électrique.

La demande de brevet internationale WO 01/53543 décrit un procédé de traitement de laitier d'aciérie électrique qui comprend les étapes suivantes :
(a) transfert du laitier dans un récipient métallurgique ;
(b) démoussage du laitier dans ce récipient métallurgique par ajout d'un agent démoussant tel que le FeO ou la silice en quantité suffisante pour abaisser la température de fusion du laitier en dessous de 1300°C. ;
(c) chauffage du laitier pour le rendre fluide ;
(d) refroidissement forcé dudit laitier.

Le document WO97/46717 propose de traiter un laitier riche en chrome dans un convertisseur conçu pour la mise en oeuvre du procédé de soufflage d'oxygène par le fond, respectivement dans un réacteur spécialement conçu à cet effet. Dans les deux cas, le laitier préchauffé subit un traitement réducteur sur un bain de fer en fusion ayant une teneur en carbone entre 2,5 et 4,6 % en poids, de préférence entre 2,5 et 3,5 % en poids.

La demande de brevet internationale WO 01/40528 décrit un procédé de post-traitement de laitiers métallurgiques contenant des oxydes de chrome, difficilement réductibles, dans lequel on soumet le laitier en fusion à un traitement réducteur sur un pied de bain métallique carburé pour réduire les oxydes de chrome et on décante les produits métalliques. On surchauffe le laitier sur le pied de bain métallique carburé à l'aide d'un ou de plusieurs arc(s) électrique(s) en faisant mousser ledit laitier localement dans la zone du ou des arcs.

### Objet de l'invention

Il serait par avantageux de disposer d'un procédé qui permette d'élargir les possibilités de valorisation du laitier de four électrique et de laitiers de convertisseur. Conformément à l'invention, cet objectif est atteint par un procédé selon la revendication 1.

### Description générale de l'invention revendiquée avec ses principaux avantages.

L'invention concerne un procédé de traitement de laitier d'aciérie électrique et de laitier de convertisseur comprenant les étapes suivantes :
(a) transfert dudit laitier dans un récipient métallurgique comprenant un pied de bain métallique à base de fer ;
(b) réduction des oxydes de fer contenus dans le laitier par ajout de compo- sants réducteur dans le pied de bain, en excès par rapport au besoins de la réduction desdits oxydes de fer et chauffage dudit laitier dans ce réci- pient métallurgique par injection d'un gaz contenant de l'oxygène dans le pied de bain métallique,
(c) coulée du laitier et refroidissement forcé dudit laitier.

Il sera apprécié que ce pied de bain métallique constitue une protection du fond du récipient métallurgique et sert à récolter le fer des oxydes de fer réduits du laitier.

Par ailleurs, le pied de bain métallique constitue une réserve d'énergie thermique qui favorise une réduction des oxydes fer contenu dans le laitier.

Le laitier ainsi traité ne comporte presque plus d'oxydes de fer. Les oxydes fer contenus dans le laitier sont réduits et transférés presque entièrement dans le pied de bain. Un des avantages du procédé consiste donc à récupérer une importante fraction du fer contenu initialement dans le laitier.

Il reste à noter que contrairement à d'autres procédés de traitement de laitier, il n'est pas nécessaire de fournir de l'énergie sous forme électrique.

Le chauffage du pied de bain métallique est préférentiellement effectué par injection de Si, d'aluminium, de carbone ou de leurs mélanges en tant que composants réducteurs et d'un gaz contenant de l'oxygène dans le pied de bain métallique de préférence à l'aide d'une lance émergée par rapport au pied de bain métallique.

Ces réducteurs agissent en fait d'une part avec les oxydes de fer pour les réduire jusqu'à l'étage de d'oxydation zéro (sous forme de fer métallique) et d'autre part avec l'oxygène injecté pour fournir de la chaleur.

Il convient de noter qu'il est préférable de ne pas utiliser de quantités importantes de carbone que ce soit sous forme de coke ou de charbon, pour éviter un moussage incontrôlé du laitier et des débordements de laitiers en fusion en dehors du récipient métallurgique.

Selon un mode de réalisation préféré, on ajuste la composition chimique du laitier avant l'étape d) par l'ajout de SiO₂ et de AL₂O₃. Le but est d'obtenir un laitier qui présente une composition chimique proche de cette du laitier de haut fourneau. On pourra donc utiliser ce laitier de la même façon que le laitier de haut-fourneau. L'ajustement de la composition chimique du laitier se fait préférablement par ajout de bauxite et/ou de sable.

La masse du pied de bain métallique carburé représente de préférence au maximum 40 % de la masse du laitier à traiter sur ce pied de bain. Sa température est d'au moins 1450°C lors du traitement réducteur. Le pied de bain métallique constitue dès lors une réserve de chaleur non négligeable, qui permet de garantir le déroulement de l'opération de réduction à température élevée.

Comme on n'utilise pas d'arc(s) électrique(s) pour effectuer une surchauffe du laitier sur le pied de bain métallique, il n'est pas requis de disposer d'une quantité importante de métal en fusion. En plus, les investissements au niveau de l'installation de traitement sont beaucoup plus faibles.

Dès l'ajout du laitier à traiter sur le pied de bain métallique et au plus tard lorsqu'on atteint une température supérieure à 1500°C dans le laitier, on commence un brassage de l'interface métal/laitier, de sorte à favoriser le transfert de chaleur du pied de bain métallique et la réduction des oxydes métalliques (des oxydes de fer) contenus dans le laitier surchauffé en contact avec le pied de bain métallique. Le brassage de l'interface métal/laitier peut par exemple se faire par un bullage de gaz neutre (azote ou argon).

Une décantation des produits métalliques réduits est avantageusement activée par le brassage de l'interface métal/laitier.

La silice, de préférence sous forme de verre ou de sable, et/ou le Al₂O₃, de préférence sous forme de bauxite utilisés le cas échéant pour adapter la composition chimique du laitier traité à cette d'un laitier de haut-fourneau (type BF) classique peuvent être ajoutés en fin de traitement ou bien en continu ou par intermittence dès l'ajout du laitier sur le pied de bain.

Dans une variante du procédé, on peut traiter conjointement avec le laitier des poudres ou granulés contenant un ou des oxydes de fer, avec éventuellement un ou des autres oxydes réductibles cités (Ni, Mn, Cr,...). Ces autres oxydes peuvent ensuite être récupérés dans la fonte ou dans le filtre de traitement des gaz pour Zn ou Pb.

Comme exemples des ces poudres ou granulés on peut citer notamment les poussières de haut fourneau, de convertisseur, de four électrique, les calamines ou battitures sèches de laminoirs, ou encore les boues de haut fourneau ou d'aciérie séchées à un niveau d'humidité de l'ordre de 2%

Ces poudres ou granulés peuvent être avantageusement traités dans le procédé par injection ou chargement gravitaire, pendant ou à la fin d'une séquence de chargement du laitier. Comme on dispose à ce moment là d'un laitier bien formé et bien brassé, on se trouve dans de bonnes conditions pour y fondre les matières solides citées. Bien entendu les apports d'énergie sous forme de Si + Oxygène et/ou Al + Oxygène sont à ajuster en fonction de la composition des matières à fondre et réduire.

Un procédé selon l'invention se déroule normalement comme suit :
a) chargement du laitier liquide à traiter dans un récipient métallurgique dans lequel on a un pied de bain métallique ;
b) surchauffe du laitier et du pied de bain métallique par apport de réduc- teurs et par injection d'un gaz contant de l'oxygène et;
c) brassage de l'interface métal/laitier, de sorte à avoir un transfert de cha- leur du pied de bain vers le laitier et une réduction des oxydes de fer du laitier surchauffé au contact du bain métallique;
d) décantation des produits métalliques réduits ;
e) éventuellement ajout d'une source de Al₂O₃ et/ou SiO₂ (de préférence de la bauxite et/ou du sable/verre) pour ajuster la composition chimique du laitier et
f) coulée du laitier purifié.

De temps à autres, une partie du pied de bain sera coulée pour ainsi enlever le fer issu du laitier qui s'y est accumulé. Il reste à noter que ce fer (sous forme de fonte ou d'acier) ainsi récolté pourra être réintroduit dans le cycle de l'usine.

Un tel procédé permet d'obtenir une très forte valeur ajoutée d'une part par la récupération du fer contenu dans le laitier initiale, par la valorisation plus aisée du laitier obtenu et par le fait d'éviter des frais lors de la mise en décharge des laitiers initiaux.

### Description à l'aide des Figures

D'autres particularités et caractéristiques de l'invention ressortiront de la description détaillée de la figure annexée qui est fourni ci-dessous à titre d'illustration.

Pour la mise en oeuvre du procédé on utilise de préférence un récipient métallurgique d'une conception assez simple, dont la coulée s'effectue par basculement.

On pourrait cependant aussi utiliser un convertisseur ou une poche, tel qu'il est par exemple utilisé pour traiter la fonte issue d'un haut fourneau ou bien de l'acier obtenu lors de la fonte de ferraille dans un four électrique.

Le produit à traiter est un laitier de four électrique, ayant grossièrement la composition suivante : 40% de CaO, 15-20 % de SiO₂, 2-3 % MnO, 5% Al₂O₃, 1 % de P₂O₅, 2% MgO et 30-40% de FeO ou bien un laitier de convertisseur ayant grossièrement la composition suivante : 51% de CaO, 13% de SiO₂, 3-4 % MnO, 1-2% Al₂O₃, 2-3 % de P₂O₅, 2-3% MgO et 20 % de FeO+Fe₂O₃+Fe

Ces laitiers contiennent donc des quantités très importantes de fer principalement sous forme oxydée.

Dans la suite, on utilisera également le terme « laitier » pour désigner le laitier de four électrique et/ou le laitier de convertisseur à traiter.

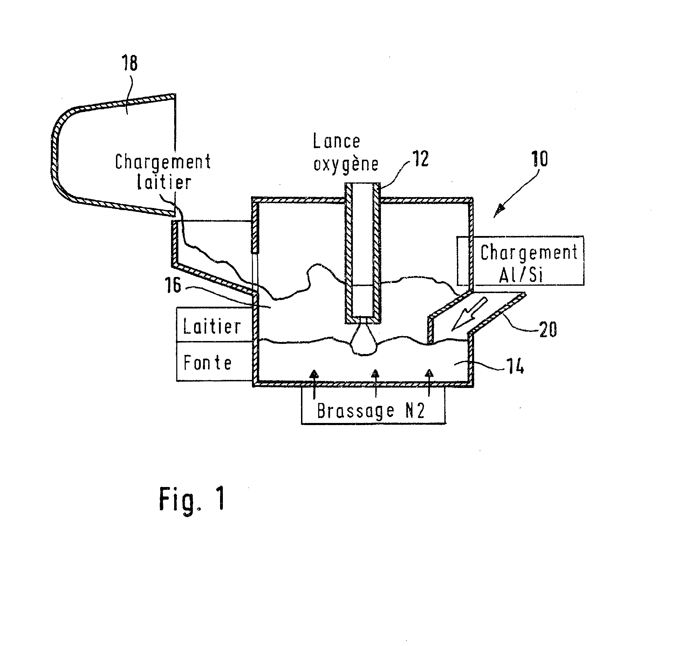

Sur la Fig. 1 est représenté un récipient métallurgique, repéré par la référence 10, muni d'une lance à oxygène 12.

Dans le fond de ce récipient 10 se trouve un pied de bain métallique 14 en général de la fonte ou d'acier d'une hauteur d'environ 500 mm. Sur ce pied de bain 14, on verse une couche de laitier à traiter 16 à partir d'une poche 18.

De part sa composition chimique un tel laitier 16 se solidifie partiellement en dessous de 1600°C en rejetant des silicates de chaux (combinaisons CaO-SiO₂). Une fois la limite de saturation en silicate de chaux dissous atteinte, il subsiste dans le laitier 16 de la chaux libre. On comprendra donc que le laitier 16 de four électrique à la sortie du four électrique, se présente sous une forme physique (moussant et visqueux) qui ne se prête pas à la granulation. De plus, sa composition n'est pas stabilisée puisque la chaux libre (CaO) risque à tout moment de réagir avec de l'eau et d'entraîner le gonflement du laitier 16.

On ajoute d'une manière protégée de l'Al et/ou du Si sous forme de FeSi dans le pied de bain 14 par gravité au travers d'un tube immergé 20. Alternativement ces matériaux peuvent être ajoutés au pied de bain par injection pneumatique ou à l'aide d'un fil contenant ces matériaux.

Par la lance immergée 12, de l'oxygène est injecté sur la surface du pied de bain 14 en dessous du laitier à traiter 16. Cet oxygène réagit avec les réducteurs contenus dans le pied de bain et conduit à une surchauffe du pied de bain. Par le transfert de chaleur entre le pied de bain et le laitier, celui-ci devient plus fluide.

On peut alors procéder à un ajustement de la composition du laitier 16. De préférence, on introduit au moyen d'une goulotte (non représentée) une quantité suffisante de SiO₂ et de'Al₂O₃ pour adapter la composition du laitier en vue du type de valorisation envisagé.

Pendant toute la durée du traitement, on effectue une homogénéisation par agitation à l'aide de l'injection d'un gaz de barbotage par le fond du récipient ou d'une lance de brassage pneumatique enfoncée profondément dans le pied de bain métallique.

A la fin du procédé de traitement, on procède à un refroidissement forcé du laitier 16. On effectue de préférence une granulation aqueuse du laitier 16. Le récipient métallurgique 10 est incliné et le laitier 16 versé dans un bac de granulation. La forme physique du laitier 16, qui est désormais liquide et fluide, assure un bon échange thermique avec l'eau lors de la granulation. Il est donc possible de refroidir de façon brusque et efficace le laitier, d'où un bon rendement et une bonne qualité de granulation.

On comprendra que le refroidissement forcé du laitier 16 doit être adapté au type de valorisation envisagé pour celui-ci. De manière à modifier les caractéristiques du laitier solidifié, on jouera donc sur le type de refroidissement forcé (bac de granulation aqueuse avec ou sans jets d'eau, écoulement sur surface refroidie avec ou sans arrosage, circulation forcée d'air ou de vapeurs d'eau, etc.) et sur la vitesse de refroidissement.

### Exemple

A titre d'exemple, le procédé décrit ci-dessus est appliqué à un laitier de type BOF :

A 1 t de laitier BOF sont rajoutés 105 kg FeSi (à 75% Si), 105 kg de SiO₂ (sable), 110 kg d'Al₂O₃ (sous forme de bauxite), 30 kg de coke et 55 Nm3 d'O₂ pour obtenir 0.22 t de fonte à 4%C et 1,08 t de laitier de type BF à 46% CaO, 37% SiO₂ et 11 % Al₂O₃.

Alternativement, on peut rajouter à 1 t de laitier BOF 90 kg Al, 260 kg de SiO₂ (sable), 135 kg d'Al₂O₃ (sous forme de bauxite), 30 kg de coke et 50 Nm3 d'O₂ pour obtenir 0.19 t de fonte à 4%C et 1,26 t de laitier de type BF à 40% CaO, 31 % SiO₂ et 25 % Al₂O₃.

Pour traiter le laitier d'un convertisseur de 300t coulant toutes les 30 min. environ 30 t de laitier, il faut en visant d'effectuer le traitement proprement dit en 20 min, souffler de l'ordre 4500 Nm3 O₂ qui correspond au débit d'une installation moderne de type aluminothermie pour chauffage de postes d'acier (HALT).

**Tableau des références**

| | |
|---|---|
| récipient métallurgique | 10 |
| lance à oxygène | 12 |
| pied de bain métallique | 14 |
| couche de laitier à traiter | 16 |
| poche | 18 |
| tube immergé | 20 |

## Revendications

1. Procédé de traitement de laitier d'aciérie électrique et de laitier de convertisseur comprenant les étapes suivantes :
(a) transfert dudit laitier dans un récipient métallurgique comprenant un pied de bain métallique ;
(b) réduction des oxydes de fer contenus dans le laitier par ajout de compo- sants réducteurs en excès par rapport aux besoins de la réaction dans le pied de bain et chauffage dudit laitier dans ce récipient métallurgique par injection d'un gaz contenant de l'oxygène dans le pied de bain métalli- que,
(c) coulée du laitier et refroidissement forcé dudit laitier.

2. Procédé selon la revendication 1, **caractérisé en ce que** la réduction des oxydes de fer est effectuée en ajoutant dans le pied de bain métallique des composants réducteurs choisis parmi le groupe constitué de FeSi, Al et carbone ou leur mélange.

3. Procédé selon la revendication 1 ou 2, **caractérisé en ce que** l'on ajuste la composition chimique du laitier avant l'étape d) par l'ajout de SiO₂ et/ou de Al₂O₃.

4. Procédé selon la revendication 3, **caractérisé en ce que** le SiO₂ est ajouté sous forme de verre ou de sable.

5. Procédé selon la revendication 3, **caractérisé en ce que** l'Al₂O₃ est ajouté sous forme de bauxite.

6. Procédé selon l'une quelconque des revendications précédentes, **caractérisé en ce que** la masse du pied de bain métallique est au plus égale à 40 % de la masse du laitier à traiter sur ce pied de bain.

7. Procédé selon l'une quelconque des revendications précédentes, **caractérisé en ce que** le pied de bain métallique est à une température d'au moins 1450°C lors du traitement du laitier.

8. Procédé selon l'une quelconque des revendications précédentes, **caractérisé en ce que** l'on effectue un brassage de l'interface métal/laitier, de sorte à avoir une réduction des oxydes de fer du laitier surchauffé en contact avec le pied de bain métallique.

9. Procédé selon la revendication 8, **caractérisé en ce que** ledit brassage de l'interface métal/laitier comprend un bullage de gaz neutre.
